# EUROPÄISCHE PATENTANMELDUNG

(11) **EP 4 831 938 A1**
(43) Veröffentlichungstag der Anmeldung: **28.10.2026**
(21) Anmeldenummer: 26173293.7
(22) Anmeldetag: 20.04.2026
(51) Int. Cl.: G06V 20/64, G06V 20/52

(54) **KLASSIFIZIERUNGSSYSTEM FÜR ZU TRANSPORTIERENDE OBJEKTE FÜR EIN GEPÄCKTRANSPORTSYSTEM, EIN SOLCHES GEPÄCKTRANSPORTSYSTEM UND EIN KLASSIFIZIERUNGSVERFAHREN FÜR ZU TRANSPORTIERENDE OBJEKTE**

(30) Priorität: 23.04.2025 DE 102025115634
(71) Anmelder: SICK AG, 79183 Waldkirch (DE)
(72) Erfinder: Kempermann, Govinda, 79261 Gutach (DE); Gerber, Jan, 79350 Sexau (DE); Baak, Josef, 79183 Waldkirch (DE); Becker, Janek, 22083 Hamburg (DE)
(74) Vertreter: Manitz Finsterwald Patent- und Rechtsanwaltspartnerschaft mbB

(57) **Zusammenfassung**

Ein Klassifizierungssystem (1) für zu transportierende Objekte (50) für ein Gepäcktransportsystem (100), mit zumindest einem Kameramodul (2), das dazu ausgebildet ist, ein zu transportierendes Objekt (50) zu erfassen, wobei das zumindest eine Kameramodul (2) einen 3D-Bildsensor (3) umfasst, der dazu ausgebildet ist, um 3D-Bilddaten (5) zu erzeugen und/oder wobei das das zumindest eine Kameramodul (2) eine 2D-Kamera (4) umfasst, die dazu ausgebildet ist, um 2D-Bilddaten (6) zu erzeugen. Das Kameramodul (2) ist dazu ausgebildet, die 3D-Bilddaten (5) und/oder die 2D-Bilddaten (6) an ein Auswertungsmodul (15) zu übertragen. Das Auswertungsmodul (15) ist dazu ausgebildet, um ein Kl-Modell (16) zu verwenden, um zumindest ein Attribut (20) des Objekts (50) zu ermitteln. Das Auswertungsmodul (15) ist dazu ausgebildet, um das Objekt (50) mittels eines regelbasierten Vergleichs (17) unter Verwendung des ermittelten zumindest einen Attributs (20) und zumindest einer Regelvorgabe (18) dahingehend zu klassifizieren, ob es auf dem Gepäcktransportsystem (100) transportierbar ist.

## Beschreibung

Die Erfindung betrifft ein Klassifizierungssystem für zu transportierende Objekte für ein Gepäcktransportsystem, ein solches Gepäcktransportsystem und ein Klassifizierungsverfahren für zu transportierende Objekte.

Die Überprüfung von Objekten, wie z.B. Gepäck und Versandartikel, ist in vielen industriellen Bereichen, wie beispielsweise in der Logistik oder bei der Kontrolle von Flughafengepäck, essenziell, um fehlerhafte oder gefährliche Objekte zu detektieren. Eine solche Überprüfung findet in der Regel durch entsprechendes Personal statt. Beispielsweise kontrolliert eine Fachkraft an einem Flughafenförderband die über das Förderband laufenden Gepäckstücke, um nicht förderbare Gegenstände oder Sondergepäck zu identifizieren und auszusortieren.

Ein Problem bei der Überprüfung der Förderobjekte besteht u.a. darin, dass die Geschwindigkeit, sowie die Zuverlässigkeit der Überprüfung von der überprüfenden Person abhängen. Somit kann es zu längeren Stillstandzeiten des Gepäcktransportsystems als nötig kommen. Außerdem können fehlerhafte oder gefährliche Objekte aufgrund menschlichen Versagens unerfasst bleiben. Bleiben solche Objekte unerfasst, so kann es zu Beschädigungen des Gepäcktransportsystems kommen. Dies kann in Staus und entsprechenden Folgekosten resultieren. Das Gepäcktransportsystem ist dadurch anfällig und kann nicht optimal genutzt und ausgelastet werden. Daher müssen an verschiedenen Stellen technische und personelle Redundanzen vorgehalten werden, um auf solche Probleme schnell reagieren zu können.

Es kann somit als eine Aufgabe der Erfindung angesehen werden, ein Klassifizierungssystem für zu transportierende Objekte für ein Gepäcktransportsystem, sowie ein solches Gepäcktransportsystem und ein entsprechendes Klassifizierungsverfahren für zu transportierende Objekte bereitzustellen.

Die Aufgabe wird durch das Klassifizierungssystem gemäß dem Anspruch 1, durch das Gepäcktransportsystem gemäß dem Anspruch 14 und durch das Klassifizierungsverfahren gemäß dem Anspruch 15 gelöst. In den Ansprüchen 2 bis 13 sind vorteilhafte Weiterbildungen des Klassifizierungssystems angegeben.

Das erfindungsgemäße Klassifizierungssystem dient zum Klassifizieren von zu transportierenden Objekten, wie beispielsweise Gepäck oder Versandartikel, für ein Gepäcktransportsystem. Ein solches Gepäcktransportsystem kann beispielsweise in Flughäfen Verwendung finden. Das Klassifizierungssystem umfasst zumindest ein Kameramodul, welches dazu ausgebildet ist, zumindest ein zu transportierendes Objekt, insbesondere optisch, zu erfassen. Das zumindest eine Kameramodul umfasst einen, insbesondere laufzeitbasierten, 3D-Bildsensor. Der 3D-Bildsensor ist dazu ausgebildet, um 3D-Bilddaten des Objekts zu erzeugen. Ergänzend oder alternativ umfasst das zumindest eine Kameramodul eine 2D-Kamera, die dazu ausgebildet ist, um 2D-Bilddaten des Objekts zu erzeugen. Das Klassifizierungssystem umfasst außerdem ein Auswertungsmodul, wobei das Kameramodul dazu ausgebildet ist, die 3D-Bilddaten und/oder die 2D-Bilddaten an das Auswertungsmodul zu übertragen. Das Auswertungsmodul ist dazu ausgebildet, um ein Kl-Modell zu verwenden, um zumindest ein Attribut des Objekts zu ermitteln. Das Auswertungsmodul ist weiter dazu ausgebildet, um das Objekt mittels eines regelbasierten Vergleichs unter Verwendung des ermittelten zumindest einen Attributs und zumindest einer Regelvorgabe dahingehend zu klassifizieren, ob es auf dem Gepäcktransportsystem transportierbar ist oder nicht.

Ein Vorteil liegt bei Einsatz eines Kameramoduls vor, welches einen 3D-Bildsensor und/oder eine 2D-Kamera umfasst. 3D-Bildsensoren liefern eine präzise Tiefeninformation, die bei der Analyse der räumlichen Position und der Struktur eines Objekts entscheidend sind. In einer bevorzugten Kombination mit den hochauflösenden Bildinformationen einer 2D-Kamera ermöglicht dies ein genaueres Verständnis der Form, Größe und Oberflächenbeschaffenheit des Objekts. 2D-Kameras liefern detaillierte Farb- und Texturinformationen, die zusammen mit den 3D-Forminformationen die Ermittlung der Attribute des Objekts verbessern. Dies ist besonders nützlich in komplexen Szenarien, wo Objekte ähnliche Formen haben können, sich aber in Farbe oder Textur unterscheiden, wie dies beispielsweise bei Gepäckstücken der Fall ist. 3D-Bildsensoren, insbesondere solche, die auf Time-of-Flight (ToF) oder strukturiertem Licht basieren, können unabhängig von den Beleuchtungsbedingungen effektiv funktionieren. Dies ergänzt die Fähigkeit der 2D-Kameras, die unter idealen Lichtbedingungen das beste Ergebnis liefern.

Es ist außerdem besonders vorteilhaft, dass die Klassifikation zweistufig erfolgt. In einer ersten Stufe wird das zumindest eine Attribut des zu transportierenden Objekts ermittelt. Hier ist der Einsatz eines Kl-Modells besonders vorteilhaft, weil dadurch auf besonders effiziente Art und Weise das zumindest eine Attribut des zu transportierenden Objekts ermittelt wird und das für beispielsweise Millionen unterschiedlicher Objekte. In einer zweiten Stufe wird dieses zumindest eine Attribut einem regelbasierten Vergleich unterworfen. In diesem regelbasierten Vergleich wird beispielsweise geprüft, ob das Attribut in einem zulässigen, gemäß der Regelvorgabe, Bereich liegt oder nicht. Durch diesen neuartigen zweistufigen Ansatz ist das Ergebnis der Klassifizierung für einen Benutzer nachvollziehbar. Liegt ein Fehler in der Klassifikation vor, so kann nachgeprüft werden woher der Fehler kam. Die einzelnen Stufen geben Teilergebnisse aus, die für einen Benutzer interpretierbar sind. Das Zusammenführen dieser Teilergebnisse zu einer "Gesamtklassifizierung" erfolgt dann auf Basis einer abstrahierten Entscheidungstabelle, den sogenannten "Business Rules", also der Regelvorgabe. Die einzelnen Schritte sind dabei derart konzipiert, dass sie mit den vorhandenen Daten gelöst werden können. Weiterhin sind diese einzelnen Schritte für den Benutzer inhaltlich nachvollziehbar und überprüfbar. Dadurch können Rückmeldungen eingearbeitet und Anforderungen einparametriert werden.

Unter den genannten 3D-Bilddaten sind von dem 3D-Bildsensor generierte Bilddaten zu verstehen, die insbesondere eine Tiefeninformation, beispielsweise also einen Abstand eines in den Bilddaten repräsentierten Objekts zu dem 3D-Bildsensor, enthalten. Insbesondere können die 3D-Informationen bereits mittels einer Recheneinheit des zumindest einen Kameramoduls, z.B. mittels eines hierfür vorgesehenen ASICs (Application-Specific Integrated Circuit) wie ein ISP (Image Signal Processor), in dem zumindest einen Kameramodul berechnet werden. Die 3D-Informationen ermöglichen insbesondere eine genaue Bestimmung der Dimensionierung des Objekts, beispielsweise eine Bestimmung der Größe, Form und Orientierung des Objekts. Der 3D-Bildsensor umfasst insbesondere einen lichtlaufzeitbasierten Bildsensor, eine 3D-Stereokamera und/oder einen SLS-Bildsensor (Structured Light Scanning Bildsensor).

Die 2D-Bilddaten können "herkömmliche" Bilddaten sein, die ein herkömmliches fotografisches zweidimensionales Bild repräsentieren. Die 2D-Bilddaten können beispielsweise Farbinformationen, insbesondere hochauflösende 2D-RGB-Informationen, und/oder Grauwertinformationen für eine Vielzahl von Bildpixeln umfassen. Die Grauwertinformationen können beispielsweise durch eine IR-Kamera, insbesondere unter aktiver Beleuchtung, oder durch eine Umwandlung der RGB-Informationen einer RGB-Kamera in Grauwertinformationen erzeugt werden. Die Klassifizierung von Objekteigenschaften kann unter Verwendung, insbesondere ausschließlich, der Farbinformationen und/oder unter Verwendung, insbesondere ausschließlich, der Graustufeninformationen erfolgen. In manchen Fällen kann die Klassifizierung von Objekteigenschaften unter Verwendung der Farbinformationen vorteilhafter sein, z.B. bei der Segmentierung der Objekte, während in anderen Fällen die Klassifizierung von Objekteigenschaften unter Verwendung der Graustufeninformationen vorteilhafter sein kann, beispielsweise wenn der Hintergrund die gleiche Farbe wie das Objekt aufweist oder bei der Klassifizierung von Materialeigenschaften des Objekts, wobei die Graustufeninformationen beispielsweise ein IR-Graustufenbild umfassen, das mit infrarotem Licht aufgenommen wurde und in Graustufen dargestellt wird.

In einer vorteilhaften Weiterbildung liegt das zumindest eine Attribut in einer für den Menschen lesbaren Form vor. Hierbei kann es sich um eine Textform und/oder eine Bildform handeln. Dadurch kann unmittelbar durch einen Benutzer validiert werden, ob das KI-Modell das richtige Attribut dem Objekt zugewiesen hat.

In einer vorteilhaften Weiterbildung ist das Auswertungsmodul dazu ausgebildet, um das zumindest eine Attribut für einen Benutzer auszugeben. Eine solche Ausgabe kann beispielsweise auf einem Computerbildschirm erfolgen. Es ist auch möglich, dass die Ausgabe, z.B. auf einem Webserver erfolgt, auf den ein Computer des Benutzers zugreift und das Attribut darstellt. Dadurch kann der Benutzer sofort erkennen, welches Attribut dem Objekt zugewiesen wurde.

In einer vorteilhaften Weiterbildung ist das Auswertungsmodul dazu ausgebildet, um das zumindest eine Attribut zusammen mit dem Ergebnis der Klassifikation und/oder der zumindest einen Regelvorgabe für einen Benutzer auszugeben. Eine solche Ausgabe kann beispielsweise auf einem Computerbildschirm erfolgen. Es ist auch möglich, dass die Ausgabe z.B. auf einem Webserver erfolgt, auf den ein Computer des Benutzers zugreift und das Attribut darstellt. Dadurch sieht der Benutzer nicht nur das Attribut, sondern auch das Ergebnis des regelbasierten Vergleichs bzw. die entsprechende Regelvorgabe, mit welcher das Attribut verglichen wurde. Der Benutzer kann sofort feststellen, ob das Ergebnis des regelbasierten Vergleichs zu dem ermittelten Attribut passt oder nicht.

In einer besonderen Weiterbildung ist das Auswertungsmodul dazu ausgebildet, um lediglich dasjenige zumindest eine Attribut, insbesondere zusammen mit dem Ergebnis der Klassifikation und/oder der zumindest einen Regelvorgabe, für einen Benutzer auszugeben, welches gemäß dem regelbasierten Vergleich die Regelvorgabe nicht erfüllt. Dadurch ist für Benutzer sofort ersichtlich aus welchem Grund das Auswertungsmodul das Objekt als nicht-transportierbar eingestuft hat. Hat das Objekt eine maximale Länge von beispielsweise 150 cm und beträgt die maximale Länge für ein Objekt, welches auf dem Gepäcktransportsystem transportierbar ist, 140 cm, so würde lediglich das Attribut, welches die Länge des Objekts abbildet, für den Benutzer ausgegeben werden.

In einer vorteilhaften Weiterbildung ist eine Eingabeeinheit vorgesehen, wobei die Eingabeeinheit dazu ausgebildet ist, um eine Benutzereingabe zu empfangen, wobei das zumindest eine Attribut in Abhängigkeit der empfangenen Benutzereingabe neu festlegbar ist. In diesem Fall ist es möglich, dass eventuell fehlerhaft ermittelte Attribute neu bestimmt werden. Dies kann auch als "labeling" bezeichnet werden.

In einer besonderen Weiterbildung ist die Auswertungsmodul dazu ausgebildet, um das Attribut vor oder nach der Klassifikation durch den regelbasierten Vergleich in Abhängigkeit der Benutzereingabe neu festzulegen.

In einer besonderen Weiterbildung ist das Kl-Modell durch die empfangene Benutzereingabe trainierbar. Hat beispielsweise das Kl-Modell dem Objekt das Attribut "Koffer" zugewiesen und handelt es sich bei dem Objekt in Wirklichkeit um eine Tasche, so kann ein Benutzer das Attribut durch seine Benutzereingabe neu festlegen, wodurch im Gegenzug das KI-Modell, insbesondere im Betrieb, trainiert wird.

In einer besonderen Weiterbildung ist das Auswertungsmodul dazu ausgebildet, um das KI-Modell zu verwenden, um zumindest zwei, drei, vier, fünf, sechs oder mehr als sechs Attribute des Objekts zu ermitteln. Dadurch kann das Objekt deutlich genauer charakterisiert werden.

In einer besonderen Weiterbildung ist das Auswertungsmodul dazu ausgebildet, jedes ermittelte Attribut im regelbasierten Vergleich mit einer entsprechenden Regelvorgabe zu vergleichen. Gibt es beispielsweise fünf Attribute, so gibt es auch zumindest fünf Regelvorgaben.

In einer vorteilhaften Weiterbildung ermittelt das Auswertungsmodul ein weiteres zusätzliches Attribut für das Objekt, wenn das bisher zumindest eine ermittelte Attribut mit einer Wahrscheinlichkeit ermittelt wurde, die unterhalb eines Schwellwerts liegt. In diesem Fall steht im regelbasierten Vergleich zumindest ein zusätzliches Attribut zur Verfügung, um zu klassifizieren, ob das Objekt auf dem Gepäcktransportsystem transportierbar ist oder nicht. Dadurch wird der Problematik Rechnung getragen, falls ein Attribut nicht sicher ermittelt werden konnte. In diesem Fall werden weitere Attribute zur Entscheidungsfindung herangezogen. Wird ein Attribut dagegen mit einer Wahrscheinlichkeit ermittelt, die oberhalb des Schwellwerts oder oberhalb eines weiteren Schwellwerts liegt, so kann ohne die Ermittlung eines zusätzlichen Attributs direkt der regelbasierte Vergleich gestartet werden. Dadurch wird Zeit gespart.

In einer vorteilhaften Weiterbildung ist das zumindest eine Attribut ausgewählt aus zumindest einer der folgenden Eigenschaften:
a) Farbe; und/oder
b) Form, wie beispielsweise rund, eckig, länglich und/oder flach; und/oder
c) Material, wie beispielsweise Plastik, Metall, Karton und/oder Stoff; und/oder
d) Abmessungen, wie beispielsweise Länge, Breite und/oder Tiefe; und/oder
e) Beschaffenheit, wie beispielsweise weich und/oder hart; und/oder
f) Art wie beispielsweise Koffer, Tasche, Versandartikel und/oder Sportgegenstand; und/oder
g) außergewöhnliche Eigenschaften, wie beispielsweise abstehende Bänder, ausgezogene Griffe und/oder eine Verpackung in Plastikfolie; und/oder
h) Gewicht; und/oder
i) Gewichtsverteilung.

Sollten derartige Attribute ausgegeben werden, so können diese direkt durch einen Benutzer verifiziert werden. Das Gewicht bzw. die Gewichtsverteilung kann mittels einer zusätzlichen Waage festgestellt werden.

Eine entsprechende Regelvorgabe kann beispielsweise besagen, dass ein Objekt eine maximale Länge, Breite und/oder Tiefe haben kann. Kommt im regelbasierten Vergleich heraus, dass das Attribut, welches beispielsweise die maximale Länge abbildet, größer ist als die maximal zulässige Länge gemäß der Regelvorgabe, so kann das Objekt ausgesondert werden. Ergänzend oder alternativ kann das Attribut, gegebenenfalls zusammen mit der verletzten Regelvorgabe, für einen Benutzer ausgegeben werden.

In einer vorteilhaften Weiterbildung handelt es sich bei der Regelvorgabe um eine Vorgabe, die ein Attribut erfüllen muss oder um einen Grenzwert oder um einen Wertebereich, den ein Attribut einhalten muss. Die Regelvorgabe kann kundenspezifisch, anwendungsspezifisch und/oder allgemein sein. Es können mehrere Regelvorgaben vorliegen. So kann ein Flughafen eine allgemeine Regelvorgabe erlassen, die für alle Objekte gilt. Einzelne Fluggesellschaften können noch kundenspezifische Regelvorgaben erlassen, die nur für Kunden dieser Fluggesellschaft gelten. Beispielsweise kann die Fluggesellschaft A andere Abmessungen zulassen wie die Fluggesellschaft B. Es kann auch anwendungsspezifische Regelvorgaben geben. Zum Beispiel kann eine Regelvorgabe für Fluggesellschaft A für den Flugzeugtyp X anders lauten als für dieselbe Fluggesellschaft A mit dem Flugzeugtyp Y.

In einer besonderen Weiterbildung liegt die Regelvorgabe in einer für den Benutzer lesbaren Form vor. Dadurch kann der Benutzer das ermittelte Attribut direkt mit der Regelvorgabe vergleichen.

In einer besonderen Weiterbildung betreffen verschiedene Regelvorgaben dasselbe Attribut, wobei die allgemeine Regelvorgabe definiert, was das Attribut mindestens erfüllen muss. Diese allgemeine Regelvorgabe kann durch die kundenspezifische Regelvorgabe eingeschränkt aber nicht erweitert werden. Die kundenspezifische Regelvorgabe kann durch die anwendungsspezifische Regelvorgabe eingeschränkt aber vorzugsweise nicht erweitert werden. So ist sichergestellt, dass die Vorgabe des Flughafenbetreibers stets eingehalten wird, das Gepäcktransportsystem also nicht beschädigt wird. Einschränkungen, die von der Fluggesellschaft oder dem Flugzeugtyp herrühren, führen lediglich dazu, mehr Objekte als nicht transportierbar klassifiziert werden, als dies durch die allgemeine Regelvorgabe der Fall wäre. Sieht die allgemeine Regelvorgabe beispielsweise vor, dass nur Objekte mit einer Länge von maximal 140 cm transportiert werden dürfen, so kann die kundenspezifische bzw. die anwendungsspezifische Regelvorgabe diese maximale Länge noch weiter beschränken, beispielsweise auf 130 cm. Obwohl ein Objekt mit einer maximalen Länge von 130 cm problemlos durch das Gepäcktransportsystem transportierbar ist, würde dieses ausgesondert werden, weil es beispielsweise in dem entsprechenden Flugzeug keinen Platz findet. Grundsätzlich sind daher lediglich Objekte durch das Gepäcktransportsystem transportierbar, die die zumindest eine Regelvorgabe erfüllen. Wird beispielsweise die anwendungsspezifische Regelvorgabe verletzt, so könnte das Objekt prinzipiell auf dem Gepäcktransportsystem transportiert werden ohne dass dieses beschädigt würde, allerdings wird es dennoch als nicht transportierbar eingestuft, weil es beispielsweise nicht in das Flugzeug passt.

In einer besonderen Weiterbildung ist das Auswertungsmodul dazu ausgebildet, um im regelbasierten Vergleich eine für das Objekt hinterlegte kundenspezifische Regelvorgabe und/oder eine für das Objekt hinterlegte anwendungsspezifische Regelvorgabe heranzuziehen. Beispielsweise kann das Objekt über ein Tag, wie beispielsweise einen Barcode, RFID-Chip, usw. verfügen, wobei das Auswertungsmodul die Information, welches durch das Tag verfügbar ist, nutzt, um die entsprechende kundenspezifische Regelvorgabe und/oder die entsprechende anwendungsspezifische Regelvorgabe heranzuziehen.

In einer besonderen Weiterbildung ist das Auswertungsmodul dazu ausgebildet, um für ein Objekt die dazugehörige Fluggesellschaft und/oder den dazugehörigen Flugzeugtyp zu ermitteln, um in Abhängigkeit der dazugehörigen Fluggesellschaft und/oder des dazugehörigen Flugzeugtyps noch eine hierzu korrespondierende kundenspezifische Regelvorgabe und/oder eine hierzu korrespondierende anwendungsspezifische Regelvorgabe für den regelbasierten Vergleich heranzuziehen.

In einer vorteilhaften Weiterbildung sind zumindest ein zweites, ein drittes oder zumindest ein viertes Kameramodul mit einem 3D-Bildsensor und/oder einer 2D-Kamera vorgesehen, wobei das zumindest eine Attribut mit:
a) den 3D-Bilddaten und den 2D-Bilddaten von lediglich einem oder zumindest zwei oder allen Kameramodulen ermittelt wird; oder
b) den 3D-Bilddaten oder den 2D-Bilddaten von lediglich einem oder zumindest zwei oder allen Kameramodulen ermittelt wird.

Dadurch kann das Attribut präzise ermittelt werden, weil zusätzliche Bilddaten vorhanden sind.

In einer besonderen Weiterbildung ist das Auswertungsmodul dazu ausgebildet, um ein Objekt als nicht transportierbar zu klassifizieren, wenn ein ermitteltes Attribut dieses Objekts lediglich eine Regelvorgabe nicht erfüllt.

In einer besonderen Weiterbildung werden unterschiedliche Attribute durch unterschiedliche Kameramodule ermittelt. So ist das Kl-Modell dazu ausgebildet, um bestimmte Attribute lediglich durch Bilddaten bestimmter Kameramodule zu ermitteln.

In einer besonderen Weiterbildung wird zumindest ein bestimmtes Attribut lediglich durch die 3D-Bilddaten des 3D-Bildsensors ermittelt. Ergänzend oder alternativ wird zumindest ein bestimmtes Attribut lediglich durch die 2D-Bilddaten der 2D-Kamera ermittelt. Bei Einsatz mehrerer Kameramodule können die 3D-Bilddaten bzw. die 2D-Bilddaten der mehreren Kameramodule gemeinsam verwendet werden, um das bestimmte Attribut zu ermitteln.

In einer vorteilhaften Weiterbildung sind zumindest ein zweites, ein drittes oder zumindest ein viertes Kameramodul mit einem 3D-Bildsensor und/oder einer 2D-Kamera vorgesehen. Die Kameramodule sind in unterschiedlicher Ausrichtung und/oder Winkellage um das zu erfassende Objekt herum angeordnet sind, sodass die jeweiligen 3D-Bilddaten und/oder 2D-Bilddaten zumindest teilweise unterschiedliche Bereiche und/oder Seiten des Objekts beinhalten. Dadurch kann das Objekt besonders genau erfasst werden, wodurch das zumindest eine Attribut sehr genau, also mit einer hohen Wahrscheinlichkeit, durch das Kl-Modell ermittelt werden kann.

In einer besonderen Weiterbildung ist die Belichtungszeit der 2D-Kamera des zumindest einen Kameramoduls auf die Geschwindigkeit eines Förderbands angepasst, auf welcher das Objekt transportierbar ist. So sind längere Belichtungszeiten möglich, wenn sich das Förderband langsamer bewegt als wenn sich das Förderband schneller bewegt.

In einer besonderen Weiterbildung ist das zumindest eine Kameramodul dazu ausgebildet, das Objekt aufzunehmen, wenn sich dieses auf dem Förderband befindet und an dem zumindest einen Kameramodul vorbeigeführt wird, also in Bewegung ist. Dadurch muss das Förderband nicht angehalten werden.

In einer besonderen Weiterbildung weisen der 3D-Bildsensor und die 2D-Kamera im Wesentlichen denselben Sichtbereich, einen überlappenden Sichtbereich oder aneinander angrenzende Sichtbereiche auf. Der Sichtbereich bezeichnet den Bereich, welcher in den Bilddaten abgebildet werden kann und in dem das Objekt enthalten ist. Bevorzugt sind beispielsweise zumindest 90 % des Raumwinkels des Sichtbereichs von 3D-Sensor und 2D-Kamera identisch. Bevorzugt sind die Sichtachsen, d.h. die Ausrichtung, des 3D-Bildsensors und der 2D-Kamera parallel.

In einer besonderen Weiterbildung ist das Kl-Modell dazu ausgebildet, um zusätzliche Bilddaten von anderen Kameramodulen zu verwenden, falls das zumindest eine zu ermittelnde Attribut mit einer Wahrscheinlichkeit ermittelt wird, die unterhalb eines Schwellwerts liegt. Dadurch kann die Genauigkeit, mit welcher das ermittelte Attribut ermittelt wird, erhöht werden.

In einer vorteilhaften Weiterbildung ist das Auswertungsmodul dazu ausgebildet:
a) die 3D-Bilddaten von mehreren Kameramodulen; und/oder
b) die 2D-Bilddaten von mehreren Kameramodulen; und/oder
c) die 3D-Bilddaten und die 2D-Bilddaten von einem Kameramodul; und/oder
d) die 3D-Bilddaten und die 2D-Bilddaten von mehreren Kameramodulen;
insbesondere zumindest teilweise oder überwiegend oder vollständig miteinander zu fusionieren. Basierend auf den 3D-Bilddaten und 2D-Bilddaten der jeweiligen Kameramodule kann somit ein multiperspektivisches Gesamtbild der Umgebung und/oder des Objekts erfasst werden und damit insbesondere ein präziseres bzw. vollständigeres Abbild der Realität geschaffen werden. Bei einer Fusion können die 2D-Bilddaten beispielsweise zusätzlichen mit einer Tiefeninformation hinterlegt werden.

In einer besonderen Weiterbildung sind die 3D-Bilddaten und die 2D-Bilddaten koregistriert. Insbesondere ist dies bereits bei der Erzeugung der jeweiligen Bilddaten der Fall, da die 3D-Bilddaten und die 2D-Bilddaten in demselben Bauteil, d.h. dem zumindest einen Kameramodul erzeugt werden. Koregistriert bedeutet dabei insbesondere, dass die 3D-Bilddaten und 2D-Bilddaten räumlich und zeitlich in Übereinstimmung gebracht sind, um eine präzise und konsistente Darstellung zu ermöglichen. Insbesondere ist keine aufwendige Synchronisierung der 3D-Bilddaten und 2D-Bilddaten, wie es beispielsweise bei Bilddaten von unterschiedlichen Kameramodulen der Fall ist, nötig.

In einer besonderen Weiterbildung ist das Auswertungsmodul ausgebildet, eine zeitliche Synchronisierung der jeweiligen 2D-Bilddaten und/oder der jeweiligen 3D-Bilddaten der Kameramodule durchzuführen. Das Auswertungsmodul kann somit als zentrale Steuer- und Auswerteeinheit ausgebildet sein. Insbesondere können die Aufnahmen der einzelnen Kameramodule, d.h. die 2D- und/oder 3D-Bilddaten zu einem jeweiligen Zeitpunkt, die für eine Klassifizierung des Objekts verwendet werden, aufeinander zeitlich abgestimmt sein, insbesondere denselben Zeitstempel aufweisen.

In einer besonderen Weiterbildung ist das zumindest eine Kameramodul im Betrieb ortsfest angeordnet.

In einer besonderen Weiterbildung ist das zumindest eine Kameramodul frei von einem Display, insbesondere frei von einem berührungsempfindlichen Display.

In einer besonderen Weiterbildung ist das zumindest eine Kameramodul im

Betrieb dazu ausgebildet, dass es das Objekt auch ohne eine Interaktion des Benutzers erfasst.

In einer besonderen Weiterbildung ist das zumindest eine Kameramodul dazu ausgebildet, um von einem Betriebszustand, in welchem es das Objekt erfasst, in einen Stand-by-Zustand überzugehen, in welchem es keine 3D-Bilddaten und/oder 2D-Bilddaten erzeugt und an das Auswertungsmodul überträgt. Dadurch wird der Energieverbrauch reduziert.

In einer besonderen Weiterbildung ist das Kameramodul dazu ausgebildet, um eine Bewegung, insbesondere von einem Objekt auf einem Förderband zu erkennen, um bei einer solchen erkannten Bewegung von dem Stand-by Zustand in den Betriebszustand überzugehen.

In einer besonderen Weiterbildung erfolgt die Erkennung der Bewegung lediglich durch den 3D-Bildsensor oder die 2D-Kamera. Optional kann dies mit reduzierter Abtastrate und/oder reduzierter Auflösung erfolgen.

In einer besonderen Weiterbildung umfasst das zumindest eine Kameramodul noch eine Beleuchtungsquelle, sodass insbesondere die 2D-Kamera optimale Ergebnisse liefert. Insbesondere ist die Beleuchtungsquelle dazu ausgebildet, um Licht in einer Wellenlänge bzw. in einem Wellenlängenbereich zu erzeugen und auf das Objekt auszusenden, welches durch die 2D-Kamera empfangbar bzw. verarbeitbar ist. Arbeitet die 2D-Kamera im IR-Bereich, so erzeugt die Beleuchtungsquelle ebenfalls Licht im IR-Bereich.

In einer besonderen Weiterbildung beinhalten die 2D-Bilddaten und die 3D-Bilddaten Bilder, die zeitlich nacheinander aufgenommen wurden. In diesem Fall beinhalten die 2D-Bilddaten und die 3D-Bilddaten eine zeitliche Abfolge von Bildern. Durch Verwendung einer solchen zeitlichen Abfolge von Bildern kann das Kl-Modell das zumindest eine Attribut genauer, also mit einer höheren Wahrscheinlichkeit, ermitteln.

In einer besonderen Weiterbildung sind der 3D-Bildsensor und die 2D-Kamera in einem einzigen Bauteil, dem Kameramodul, vereint. Das Kameramodul ist in diesem Fall sehr kompakt aufgebaut. In vielen Fällen, wie beispielsweise bei der Einrichtung einer entsprechenden Kamera in einem Lesetunnel einer Gepäckkontrolle, ist der Bauraum ein entscheidender Faktor. Insbesondere in schwer zugänglichen Bereichen kann die Integration des Kameramoduls somit deutlich vereinfacht werden. Außerdem kann die Ausrichtung des 3D-Bildsensors und der 2D-Kamera zueinander bei Herstellung des Kameramoduls verifiziert werden. Eine aufwendige Installation und Kalibration am Einsatzort entfällt dadurch.

In einer besonderen Weiterbildung umfasst das Klassifizierungssystem ausschließlich ein Kameramodul. Dadurch kann der notwendige Bauraum zu Installation des Klassifizierungssystems gering gehalten werden. Grundsätzlich können der 3D-Bildsensor und die 2D-Kamera auch in unterschiedlichen Gehäusen untergebracht sein.

In einer besonderen Weiterbildung handelt es sich bei der 2D-Kamera um eine Farbkamera. Ergänzend oder alternativ handelt es sich bei dem 3D-Bildsensor um einen 3D-Tiefensensor. Dadurch wird die Genauigkeit zur Ermittlung des zumindest einen Attributs für das Objekt erhöht.

In einer besonderen Weiterbildung hat die 2D-Kamera und/oder der 3D-Bildsensor eine hohe Bildwiederholrate, einen großen Öffnungswinkel und/oder eine hohe Auflösung.

In einer besonderen Weiterbildung umfasst das Auswertungsmodul das Kl-Modell. Alternativ ist das Kl-Modell zentral angeordnet, sodass beispielsweise unterschiedliche Auswertungsmodule dasselbe KI-Modell verwenden können.

In einer besonderen Weiterbildung umfasst die 2D-Kamera eine Recheneinheit, welche ausgebildet ist, Bildaufnahmeparameter der 2D-Kamera dynamisch, insbesondere automatisch, anzupassen. Die Recheneinheit ist beispielsweise ein intelligenter Chip, z.B. ein ISP. Mit anderen Worten verfügt die 2D-Kamera über automatische Anpassungsfunktionen wie z.B. Auto Gain, Auto White Balance, Auto Exposure und dergleichen. Die automatische Anpassung kann insbesondere innerhalb von für die jeweilige Anwendung vorgegebenen Grenzen erfolgen. Beispielsweise kann eine Maximaldauer für die Belichtungszeit vorgegeben sein, um Bewegungsunschärfe zu verhindern oder zumindest zu reduzieren.

In einer besonderen Weiterbildung sind das zumindest eine Kameramodul und das Auswertungsmodul über eine Kabelverbindung (beispielsweise elektrisch oder optisch) miteinander verbunden. Grundsätzlich könnte auch eine Funkverbindung eingesetzt werden.

In einer besonderen Weiterbildung ist die Kabelverbindung als Koaxialkabel ausgebildet. Über dieses Koaxialkabel kann optional auch die Energieversorgung des zumindest einen Kameramoduls erfolgen.

In einer besonderen Weiterbildung sind das zumindest eine Kameramodul und das Auswertungsmodul über ausschließlich ein Verbindungskabel miteinander verbunden. In diesem Fall wird also nur ein einziges Verbindungskabel zum elektrischen Anschluss (also für die Datenverbindung und die Energieversorgung) des zumindest einen Kameramoduls an das Auswertungsmodul benötigt, was das Anschließen des zumindest einen Kameramoduls an das Auswertungsmodul deutlich vereinfacht. Insbesondere in schwer zugänglichen Bereichen kann der Anschluss des zumindest einen Kameramoduls dadurch deutlich vereinfacht werden.

In einer besonderen Weiterbildung umfasst der 3D-Bildsensor eine integrierte Verarbeitungseinrichtung, z.B. einen DSP, welcher aus 3D-Rohdaten (gemessene Phaseninformation des ausgesandten und nachfolgend zurückgestreuten Lichts) die Tiefeninformation berechnet. Die 3D-Rohdaten können (zunächst) die 3D-Bilddaten sein. Die Verarbeitungseinrichtung kann weiterhin ungültige Pixelinformationen anhand veränderbarer Kriterien ausfiltern, Preprocessing- (vor der Umwandlung in Tiefeninformation) und Postprocessing-Schritte durchführen, welche insbesondere durch das Auswertungsmodul parametrierbar sind. Die Verarbeitungseinrichtung kann den 3D-Bilddaten Statusinformationen über die Pixeldaten (z.B. Metadaten, Konfidenzdaten) hinzufügen.

In einer besonderen Weiterbildung ist der 3D-Bildsensor ein TOF-Sensor (Time of Flight Sensor) oder ein iTOF-Sensor (indirect Time of Flight Sensor), insbesondere ein Laserscanner oder ein LIDAR (Light Detection and Ranging). Der 3D-Bildsensor kann insbesondere eine Sendelichtquelle aufweisen, welche Sendelicht in einem Überwachungsbereich aussendet. In dem Überwachungsbereich kann das Sendelicht auf Objekte treffen, welche das Sendelicht in Richtung des 3D-Bildsensors remittieren, also zurückstrahlen. Von dem 3D-Bildsensor erfasstes zurückgestrahltes Sendelicht kann dann zur Auswertung der Lichtlaufzeit (direkt oder indirekt) verwendet werden, um den Abstand zum Objekt zu ermitteln. Das Sendelicht kann dabei in verschiedene Bereiche des Überwachungsbereichs ausgesandt werden, um so ein Tiefenbild des Überwachungsbereichs mit einer Vielzahl von Bildpunkten zu erzeugen.

In einer besonderen Weiterbildung ist die 2D-Kamera eine monochrome Kamera oder eine Farbkamera und weist bevorzugt zumindest eine Auflösung von 4 Megapixel, 8 Megapixeln oder 12 Megapixeln auf. Die 2D-Kamera kann insbesondere eine Optik mit einem dahinterliegenden Bildsensor aufweisen. Durch die Optik wird ein Bild des Überwachungsbereichs auf den Bildsensor projiziert. Der Bildsensor kann die genannte Auflösung von zumindest 4 Megapixeln, 8 Megapixeln oder 12 Megapixeln aufweisen und beispielsweise als CCD- oder CMOS-Sensor ausgebildet sein.

Das Klassifizierungssystem ist somit je nach Anwendung und Bedarf anpassbar und/oder erweiterbar, sodass eine flexible Nutzung möglich ist. Durch die Kombination von, insbesondere hochauflösenden, Multi-View-2D- und 3D-Bilddaten kann eine hohe Genauigkeit der Klassifizierung erreicht werden, da verschiedene Perspektiven detailliert erfasst werden können. Dies ermöglicht eine zuverlässige Detektion und/oder Klassifizierung der Objekte, da selbst kleine Objekte oder Anomalien präzise erkannt werden können. Insbesondere kann das Auswertungsmodul die gesammelten Bilddaten, d.h. die 2D- und/oder 3D-Bilddaten, der Kameramodule auf wesentliche Informationen zur Weiterverarbeitung, insbesondere zur Klassifizierung des Objekts, reduzieren.

In einer besonderen Weiterbildung kann das KI-Modell basierend auf 3D-Beispielbilddaten und/oder 2D-Beispielbilddaten trainiert werden oder trainiert worden sein. Die Beispielbilddaten enthalten beispielsweise von einem jeweiligen Kameramodul erfasste Bilddaten in 2D und/oder 3D, auf denen ein Objekt oder mehrere Objekte dargestellt sind, wobei ein jeweiliges Objekt für ein jeweiliges Attribut dargestellt ist. Die Attribute, die die Objekte aufweisen, können insbesondere vorgegeben sein, es kann sich daher um gelabelte Daten handeln. Zusätzlich oder alternativ können die Beispielbilddaten auch von den Kameramodule fusionierte Daten umfassen, mit denen das Kl-Modell trainiert wird. Das Kl-Modell kann ferner mit Bilddaten trainiert werden, welchen unterschiedliche Beleuchtungen, insbesondere Beleuchtungsstärken, Belichtungszeiten und/oder unterschiedliches Umgebungslicht zugrunde liegen, sodass das KI-Modell weniger sensibel auf Lichtverhältnisse reagiert. Hierdurch wird das System besonders robust.

Bei dem KI-Modell kann es sich beispielsweise um ein künstliches neuronales Netz ("Neural Network"), insbesondere um ein gefaltetes künstliches neuronales Netz ("Convolutional Neural Network" - CNN) handeln. Das KI-Modell kann beispielsweise von dem Auswertungsmodul oder von einer mit dem Auswertungsmodul verbundenen externen Recheneinrichtung ausgeführt werden und die Ermittlung der Attribute des Objekts vornehmen. Bevorzugt können die Attribute die Eigenschaften wie verschiedene Größen, verschiedene Arten und/oder Formen, verschiedene Werte und/oder Zustände des Objekts angeben. Zusätzlich oder alternativ kann das Objekt von dem KI-Modell in, insbesondere nur, zwei Klassen klassifiziert werden, wobei eine Klasse einen Zustand angibt, der "in Ordnung" bzw. "förderbar" ist, und die andere Klasse einen Zustand angibt, der "nicht in Ordnung" bzw. "nicht förderbar" ist.

Ferner kann die Hardware und Software an die Verwendung von KI-Modellen angepasst und optimiert sein, insbesondere kann die Hardware zur Verarbeitung großer Rohdatenmengen ausgebildet sein. Die Hardware kann beispielsweise für die Verarbeitung von großen Rohdatenmenge der Kameramodule ausgebildet sein, insbesondere mit einer Verarbeitungsgeschwindigkeit von bis zu 40 Gbit/s. Hierzu kann die Hardware beispielsweise GPU-Beschleuniger-Chips oder für KI-Anwendungen optimierte Recheneinrichtungen umfassen. Hierdurch kann eine Klassifikation eines Objekts in Echtzeit ermöglicht werden, wobei die Klassifikation eines Objekts insbesondere weniger als 1 Sekunde, weniger als 0,5 Sekunden, vorzugsweise weniger als 0,1 Sekunden dauert.

In einer besonderen Weiterbildung ist das Kl-Modell dazu ausgebildet, um den regelbasierten Vergleich durchzuführen.

In einer besonderen Weiterbildung umfasst das Kl-Modell eine Eingangsschicht, optional eine oder mehrere Zwischenschichten und eine Ausgangsschicht. Die Eingangsschicht weist eine Vielzahl von Knoten auf, wobei diesen Knoten die 3D-Bilddaten und die 2D-Bilddaten des zumindest einen Kameramoduls zuführbar sind. Die Ausgangsschicht umfasst zumindest einen Knoten, wobei an diesem zumindest einen Knoten das Attribut für das Objekt ausgebbar ist.

In einer besonderen Weiterbildung umfasst das Kl-Modell zumindest ein erstes und ein zweites neuronales Netzwerk, wobei das erste neuronale Netzwerk dazu ausgebildet ist und dazu verwendet wird, um ein erstes Attribut für das Objekt zu bestimmen und wobei das zweite neuronale Netzwerk dazu ausgebildet ist und dazu verwendet wird, um ein zweites Attribut für das Objekt zu bestimmen. Das erste neuronale Netzwerk ist dabei insbesondere ein anderes neuronales Netzwerk als das zweite neuronale Netzwerk. Vorzugsweise wurde das erste neuronale Netzwerk und das zweite neuronale Netzwerk mit vollständig unterschiedlichen oder mit überwiegend unterschiedlichen Daten trainiert.

In einer besonderen Weiterbildung ist das Auswertemodul dazu ausgebildet, um das erste und das zweite neuronale Netzwerk in dem Kl-Modell parallel zueinander auszuführen.

In einer besonderen Weiterbildung umfasst das KI-Modell für die meisten oder für alle Attribute ein eigenes neurales Netzwerk.

In einer vorteilhaften Weiterbildung umfasst der regelbasierte Vergleich mehrere Attribute mit jeweils zumindest einer Regelvorgabe. Der regelbasierte Vergleich bildet außerdem eine Hierarchie zwischen den mehreren Attributen, wobei das Objekt auch dann als transportierbar gilt, wenn ein Attribut zusammen mit seiner Regelvorgabe das Objekt als nicht transportierbar klassifiziert, wenn dieses Attribut in der Hierarchie hinter einem anderen Attribut zusammen mit seiner Regelvorgabe steht, welches das Objekt als transportierbar klassifiziert. Handelt es sich beispielsweise bei einem ersten Attribut um eine Länge für das Objekt von 220 cm und sagt die dazugehörige Regelvorgabe, dass nur Objekte mit einer Länge von weniger als 150 cm transportierbar sind und handelt es sich beispielsweise bei dem zweiten Attribut, welches die Art des Objekts spezifiziert, um ein Surfbrett und sagt die dazugehörige Regelvorgabe, dass Surfbretter transportierbar sind, so würde das Objekt durch den regelbasierten Vergleich als transportierbar klassifiziert werden, wenn das zweite Attribut in der Hierarchie vor, also über dem ersten Attribut steht.

In einer besonderen Weiterbildung ist das Auswertungsmodul dazu ausgebildet, um die Hierarchie heranzuziehen.

In einer besonderen Weiterbildung ist eine Eingabeeinheit vorgesehen und dazu ausgebildet, um eine Benutzereingabe zu empfangen, wobei das Auswertungsmodul dazu ausgebildet ist, um die Hierarchie in Abhängigkeit der empfangen Benutzereingabe festzulegen und/oder abzuändern.

In einer vorteilhaften Weiterbildung ist das Auswertungsmodul dazu ausgebildet, um im regelbasierten Vergleich ein erstes Vergleichsergebnis von einem ersten Attribut mit seiner zumindest einen Regelvorgabe und zumindest einem zweiten Vergleichsergebnis von einem zweiten Attribut mit seiner zumindest einen Regelvorgabe über zumindest eine logische Verknüpfung miteinander zu verrechnen, um aus dem Ergebnis der logischen Verknüpfung das Objekt dahingehend zu klassifizieren, ob es auf dem Gepäcktransportsystem transportierbar ist oder nicht. Dadurch können komplexere Regeln erstellt werden, die angeben, ob ein Objekt auf dem Gepäcktransportsystem transportierbar ist oder nicht. Beispielsweise kann über "(Objektart = Ski) AND (Länge > 150 cm)" ausgedrückt werden, dass ein Objekt, welches länger als 150 cm ist, lediglich dann als transportierbar klassifiziert wird, wenn es sich bei dem Objekt um einen Ski handelt. Andere Objekte, die länger als 150 cm sind werden dann als nicht transportierbar klassifiziert.

In einer besonderen Weiterbildung handelt es sich bei der logischen Verknüpfung um eine logische Operation, insbesondere um eine AND, OR, NOT, XOR, NAND oder XNOR Operation.

In einer besonderen Weiterbildung ist eine Eingabeeinheit vorgesehen und dazu ausgebildet, um eine Benutzereingabe zu empfangen, wobei das Auswertungsmodul dazu ausgebildet ist, um die logische Operation aus der Benutzereingabe zu entnehmen.

In einer besonderen Weiterbildung ist eine Eingabeeinheit vorgesehen und dazu ausgebildet, um eine Benutzereingabe zu empfangen, wobei das Auswertungsmodul dazu ausgebildet ist, um das erste Attribut und optional die entsprechende zumindest eine Regelvorgabe für das erste Attribut aufgrund der Benutzereingabe auszuwählen. Ergänzend oder alternativ ist das Auswertungsmodul dazu ausgebildet, um das zweite Attribut und optional die entsprechende zumindest eine Regelvorgabe für das zweite Attribut aufgrund der Benutzereingabe auszuwählen.

In einer besonderen Weiterbildung umfasst das Kameramodul zumindest zwei 3D-Bildsensoren, die beabstandet voneinander angeordnet und dazu ausgebildet sind, um 3D-Bilddaten von dem Objekt aus unterschiedlichen Winkellagen zu erzeugen. Ergänzend oder alternativ umfasst das Kameramodul zumindest zwei 2D-Kameras, die beabstandet voneinander angeordnet und dazu ausgebildet sind, um 2D-Bilddaten von dem Objekt aus unterschiedlichen Winkellagen bzw. Perspektiven zu erzeugen. Dadurch erhöht sich die Genauigkeit, um Attribute des Objekts bestimmen zu können. Weiterhin kann auch dann noch ein Attribut des Objekts bestimmt werden, wenn einer der zumindest zwei 3D-Bildsensoren ausfällt und/oder wenn eine der zumindest zwei 2D-Kameras ausfällt.

In einer besonderen Weiterbildung werden die 3D-Bilddaten der zumindest zwei 3D-Bildsensoren demselben neuronalen Netzwerk des Kl-Modells oder verschiedenen neuronalen Netzwerken des Kl-Modells zugeführt. Ergänzend oder alternativ werden die 2D-Bilddaten der zumindest zwei 2D-Kameras demselben neuronalen Netzwerk des KI-Modells oder verschiedenen neuronalen Netzwerken des Kl-Modells zugeführt.

In einer besonderen Weiterbildung ist das Kl-Modell dazu ausgebildet, um alle Attribute mit allen 3D-Bilddaten und/oder mit allen 2D-Bilddaten zu ermitteln. Ergänzend oder alternativ ist das Kl-Modell dazu ausgebildet, um zumindest ein Attribut, aber nicht alle Attribute mit den 3D-Bilddaten aber nicht mit 2D-Bilddaten zu ermitteln. Ergänzend oder alternativ ist das Kl-Modell dazu ausgebildet, um zumindest ein Attribut, aber nicht alle Attribute mit den 2D-Bilddaten aber nicht mit 3D-Bilddaten zu ermitteln.

In einer besonderen Weiterbildung umfasst das KI-Modell zumindest zwei neuronale Netzwerke, wobei die zumindest zwei neuronalen Netzwerke dazu ausgebildet sind, um dasselbe Attribut zu bestimmen, wobei dem Objekt dasjenige Attribut von demjenigen neuronalen Netzwerk zugewiesen wird, welches den höchsten Konfidenzwert aufweist. Ein Konfidenzwert in einem neuronalen Netzwerk ist ein numerischer Wert, der angibt, mit welcher Wahrscheinlichkeit oder Sicherheit das neuronale Netzwerk eine bestimmte Vorhersage trifft. Er wird typischerweise zwischen 0 und 1 (bzw. 0 % bis 100 %) angegeben, wobei ein Wert nahe 1 auf eine hohe Sicherheit und ein Wert nahe 0 auf geringe Sicherheit hinweist. Handelt es sich bei dem Attribut um die "Art" des Objekts weißt das erste neuronale Netzwerk dem Attribut den Wert "Koffer" mit einem Konfidenzwert von 90% zu und weißt das zweite neuronale Netzwerk dem Attribut den Wert "Tasche" mit einem Konfidenzwert von 50% zu, so wird dem Attribut der Wert "Koffer" zugewiesen.

Das Klassifizierungssystem kann so ausgebildet sein, dass das Kameramodul lediglich einen 3D-Bildsensor oder eine 2D-Kamera aufweist. In diesem Fall werden lediglich 3D-Bilddaten oder 2D-Bilddaten erzeugt und an das Auswertungsmodul übertragen. Das Auswertungsmodul ist weiterhin dazu ausgebildet, um das KI-Modell zu verwenden, um das zumindest eine Attribut des Objekts zu ermitteln. Das Auswertungsmodul ist außerdem dazu ausgebildet, um das Objekt mittels des regelbasierten Vergleichs unter Verwendung des ermittelten zumindest einen Attributs und der zumindest einen Regelvorgabe dahingehend zu klassifizieren, ob es auf dem Gepäcktransportsystem transportierbar ist.

Das erfindungsgemäße Gepäcktransportsystem umfasst ein eingangs beschriebenes Klassifizierungssystem. Das Gepäcktransportsystem ist dazu ausgebildet, um zu befördernde Objekte, insbesondere Gepäckstücke oder Versandartikel, auszusondern, wenn diese durch das Klassifizierungssystem dahingehend klassifiziert wurden, dass diese durch das Gepäcktransportsystem nicht transportierbar sind. Das Gepäcktransportsystem umfasst insbesondere eine Fördereinrichtung, wie ein Förderband. Durch das Aussondern dieser Objekte ist sichergestellt, dass es zu keinen Beschädigungen des Gepäcktransportsystems und des jeweiligen Objekts kommt.

Das erfindungsgemäße Klassifizierungsverfahren dient zum Klassifizieren von zu transportierenden Objekten für ein Gepäcktransportsystem. In einem ersten Verfahrensschritt erfolgt ein Erfassen eines zu transportierenden Objekts mit zumindest einem Kameramodul, das einen 3D-Bildsensor und/oder eine 2D-Kamera umfasst. Weiterhin werden 3D-Bilddaaten und/oder 2D-Bilddaten erzeugt. In einem zweiten Verfahrensschritt erfolgt ein Übertragen der 3D-Bilddaten und/oder der 2D-Bilddaten an das Auswertungsmodul. In einem dritten Verfahrensschritt erfolgt ein Ermitteln von zumindest einem Attribut für das erfasste Objekt anhand der 3D-Bilddaten und/oder der 2D-Bilddaten durch ein Kl-Modell durch das Auswertungsmodul. In einem vierten Verfahrensschritt erfolgt ein Klassifizieren des zumindest einen Objekts, ob es auf dem Gepäcktransportsystem transportierbar ist anhand eines regelbasierten Vergleichs unter Verwendung des ermittelten zumindest einen Attributs und zumindest einer Regelvorgabe durch das Auswertungsmodul.

Nachfolgend wird die Erfindung rein beispielhaft unter Bezugnahme auf die Zeichnungen beschrieben. Es zeigen:
- Figur 1:: ein Ausführungsbeispiel eines erfindungsgemäßen Gepäcktransportsystems mit einem erfindungsgemäßen Klassifizierungssystem;
- Figur 2:: ein weiteres Ausführungsbeispiel eines erfindungsgemäßen Gepäcktransportsystems mit einem erfindungsgemäßen Klassifizierungssystem, wobei das Klassifizierungssystem mehrere Kameramodule umfasst;
- Figur 3:: ein Ausführungsbeispiel, welches die Funktionsweise des Klassifizierungssystems näher beschreibt;
- Figur 4:: ein Ausführungsbeispiel, welches ein Ergebnis einer Klassifizierung eines Objekts erläutert; und
- Figur 5:: ein Flussdiagramm, welches ein Klassifizierungsverfahren für zu transportierende Objekte für ein Gepäcktransportsystem erläutert.

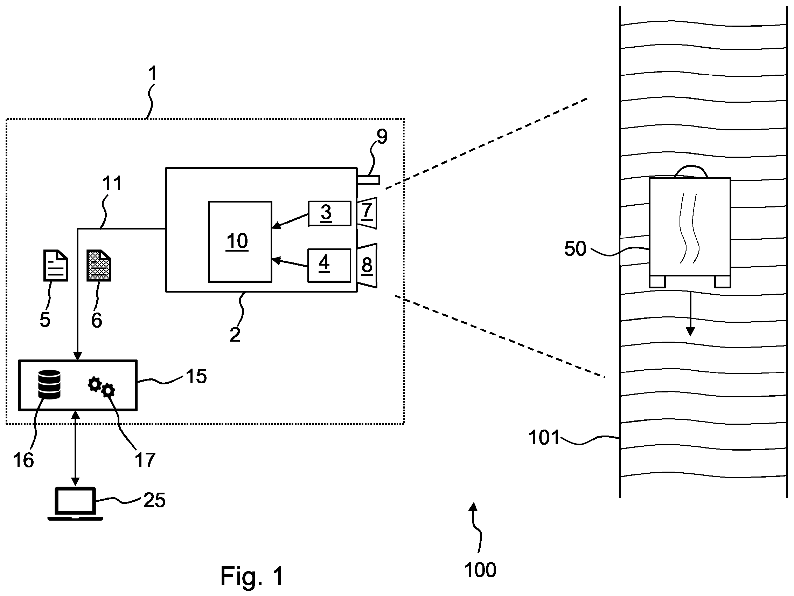

Figur 1 zeigt ein Gepäcktransportsystem 100, welches ein Klassifizierungssystem 1 für zu transportierende Objekte 50 umfasst. Das Gepäcktransportsystem 100 umfasst außerdem ein Förderband 101, auf welchem das Objekt 50 transportiert werden kann.

Das Klassifizierungssystem 1 weist zumindest ein Kameramodul 2 auf, welches dazu ausgebildet ist, um das zu transportierende Objekt 50 visuell zu erfassen. Das Kameramodul 2 umfasst einen 3D-Bildsensor 3 und eine 2D-Kamera 4. Der 3D-Bildsensor 3 ist dazu ausgebildet um 3D-Bilddaten 5 zu erzeugen. Die 2D-Kamera 4 ist dazu ausgebildet, um 2D-Bilddaten 6 zu erzeugen. Das Kameramodul 2 umfasst außerdem ein erstes Objektiv 7 für den 3D-Bildsensor 3 und ein zweites Objektiv 8 für die 2D-Kamera 4. Das Kameramodul 2 umfasst außerdem eine Beleuchtungsquelle 9, welches Licht auf das Objekt 50 aussendet.

Das Kameramodul 2 weist weiterhin eine Kommunikationseinrichtung 10 auf, welche dazu ausgebildet ist, um die 3D-Bilddaten 5 und die 2D-Bilddaten 6 über eine Verbindung 11 zu einem Auswertungsmodul 15 des Klassifizierungssystems 1 zu übertragen. Vorzugsweise wird als Verbindung 11 genau ein Verbindungskabel verwendet.

Das Auswertungsmodul 15 ist dazu ausgebildet, um ein Kl-Modell 16 zu verwenden, um zumindest ein Attribut 20 des Objekts 50 zu ermitteln.

Das Auswertungsmodul 15 ist weiter dazu ausgebildet, um das Objekt 50 mittels eines regelbasierten Vergleichs 17 unter Verwendung des ermittelten zumindest einen Attributs 20 und zumindest einer Regelvorgabe 18 dahingehend zu klassifizieren, ob es auf dem Gepäcktransportsystem 100 transportierbar ist oder nicht.

Das Ergebnis dieser Klassifikation kann einem Benutzer auf einem Computersystem 25 angezeigt werden.

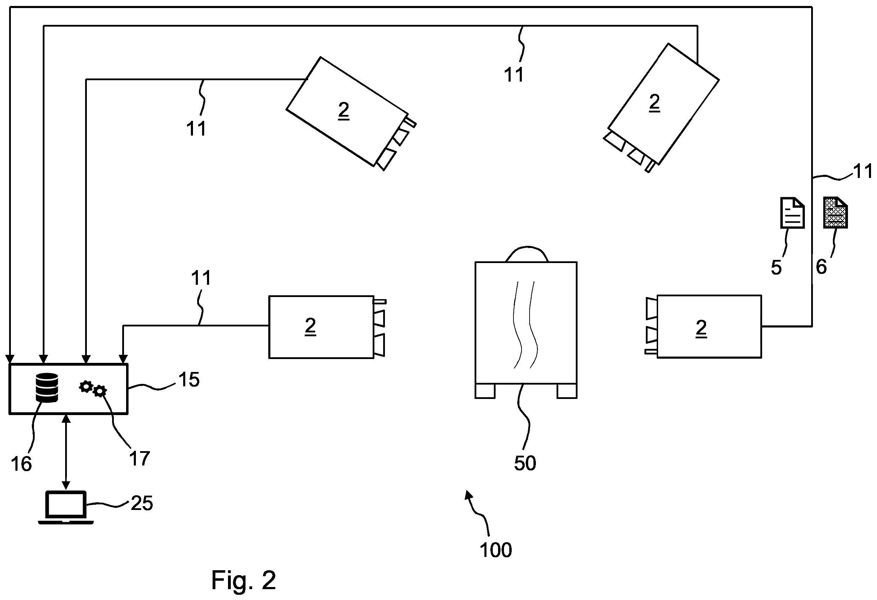

Figur 2 zeigt ein weiteres Ausführungsbeispiel des Gepäcktransportsystems 100. in diesem Fall umfasst das Klassifizierungssystem 1 eine Vielzahl von Kameramodulen 2, die in unterschiedlicher Ausrichtung und/oder Winkellage um das zu erfassende Objekt 50 herum angeordnet sind, sodass die jeweiligen 3D-Bilddaten 5 und 2D-Bilddaten 6 zumindest teilweise unterschiedliche Bereiche und/oder Seiten des Objekts 50 beinhalten.

Das Auswertungsmodul 15 ist dazu ausgebildet, um diese zusätzlichen 3D-Bilddaten 5 und 2D-Bilddaten 6 für die Bestimmung zumindest eines oder mehrerer Attribute 20 mittels des Kl-Modells 16 zu verwenden.

Die einzelnen Kameramodule 2 sind jeweils über eine Verbindung 11 mit dem Auswertungsmodul 15 verbunden. Bei dieser Verbindung 11 handelt es sich um eine parallele Verbindung 11. Grundsätzlich könnten die einzelnen Kameramodule 2 auch über eine serielle Verbindung, insbesondere eine Daisy-Chain-Verbindung mit dem Auswertungsmodul 15 verbunden sein.

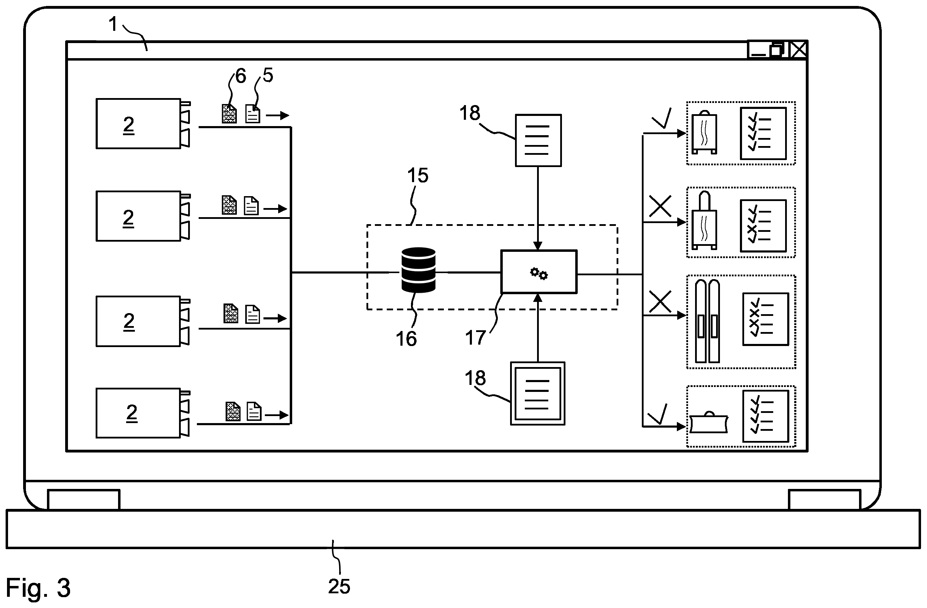

Figur 3 zeigt ein Ausführungsbeispiel, welches die Funktionsweise des Klassifizierungssystems 1 näher beschreibt. Das Klassifizierungssystem 1 umfasst eine Vielzahl von Kameramodulen 2, die 3D-Bilddaten 5 und 2D-Bilddaten 6 des Objekts 50 aufnehmen und diese 3D-Bilddaten 5 und 2D-Bilddaten 6 an das Auswertungsmodul 15 übersenden.

Das Auswertungsmodul 15 ist dazu ausgebildet, um ein Kl-Modell 16, welches vorzugsweise Bestandteil des Klassifizierungssystems 1 ist, zu verwenden, um mit diesem zumindest ein Attribut 20 des Objekts 50 zu ermitteln. Im Anschluss daran findet ein regelbasierter Vergleich 17 unter Verwendung des ermittelten zumindest einen Attributs 20 und zumindest einer Regelvorgabe 18 dahingehend statt, um das Objekt 50 zu klassifizieren, ob es auf dem Gepäcktransportsystem 100 transportierbar ist oder nicht.

Dargestellt ist ebenfalls, dass das Ergebnis der Klassifikation in einer für den Benutzer lesbaren, also interpretierbaren Form ausgegeben wird. In diesem Fall wird ein "Haken" bzw. ein "X" verwendet, die angeben, ob ein Objekt 50 transportierbar ist oder nicht. Beispielhaft sind in Figur 3 auf der rechten Seite vier Objekte 50 dargestellt. Das erste Objekt 50, welches rechts oben abgebildet ist, ist transportierbar. Der regelbasierte Vergleich 17 hat ergeben, dass alle vier ermittelten Attribute 20 der Regelvorgabe 18 genügen. Folglich sind alle Attribute mit einem Haken versehen. Das zweite Objekt 50, welches unter dem ersten Objekt 50 angezeigt ist, ist nicht transportierbar. Der regelbasierte Vergleich 17 hat ergeben, dass ein ermitteltes Attribut 20 die Regelvorgabe 18 nicht erfüllt. Dieses Attribut ist mit einem X versehen. Das dritte Objekt 50, welches unter dem zweiten Objekt 50 angezeigt ist, ist nicht transportierbar. Der regelbasierte Vergleich 17 hat ergeben, dass ein ermitteltes Attribut 20 die Regelvorgabe 18 nicht erfüllt. Dieses Attribut ist mit einem X versehen. Das vierte Objekt 50, welches unter dem dritten Objekt 50 angezeigt ist, ist transportierbar. Der regelbasierte Vergleich 17 hat ergeben, dass alle vier ermittelten Attribute 20 die Regelvorgabe 18 erfüllen. In diesem Fall werden sowohl die ermittelten Attribute 20 als auch die Information, welche dieser ermittelten Attribute 20 die Regelvorgabe 18 erfüllen oder nicht erfüllen für einen Benutzer in einer lesbaren, also interpretierbaren Form dargestellt. Grundsätzlich könnte die entsprechende Regelvorgabe 18 auch noch neben dem ermittelten Attribut 20 in einer für den Benutzer lesbaren, also interpretierbaren Form dargestellt sein.

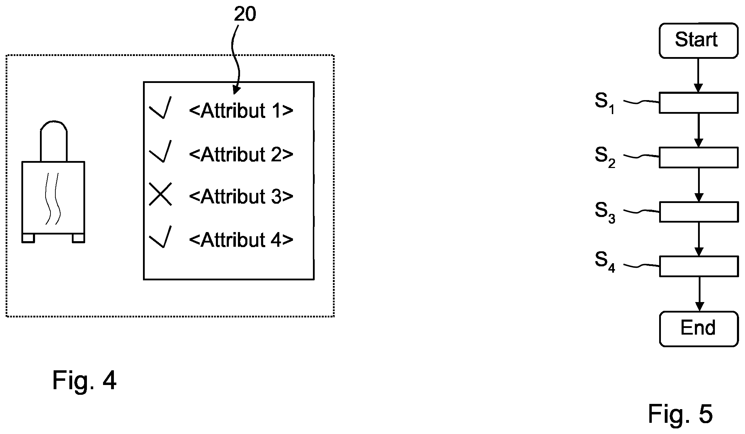

Figur 4 zeigt ein Ausführungsbeispiel, welches ein Ergebnis der Klassifizierung des Objekts 50 näher erläutert, wie dieses schon in Figur 3 dargestellt ist. Das Auswertungsmodul 15 ist dazu ausgebildet, um vier Attribute 20 des Objekts 50 zu ermitteln. In einem regelbasierten Vergleich 17 wird jedes dies Attribute 20 mit zumindest einer Regelvorgabe 18 verglichen. Das erste, zweite und vierte Attribut 20 erfüllen die jeweilige Regelvorgabe 18. Dieses Ergebnis wird mit einem Indikator, beispielsweise in Form eines Hakens, neben dem Attribut 20 dargestellt. Das dritte Attribut 20 erfüllt die entsprechende Regelvorgabe 18 nicht. Daher wird ein anderer Indikator, in diesem Fall in Form eines X, neben dem Attribut 20 dargestellt. In Benutzer erkennt sofort, welches Attribut 20 die entsprechende Regelvorgabe 18 nicht erfüllt. In diesem Fall handelt es sich um ein ausgezogenes Griffstück des zu transportierenden Objekts 50 in Form eines Koffers.

Figur 5 zeigt ein Flussdiagramm, welches ein Klassifizierungsverfahren für zu transportierende Objekte 50 für ein Gepäcktransportsystem 100 erläutert. In einem ersten Verfahrensschritt S₁ erfolgt ein Erfassen eines zu transportierenden Objekts 50 mit zumindest einem Kameramodul 2, das einen 3D-Bildsensor 3 und eine 2D-Kamera 4 umfasst. Weiterhin werden 3D-Bilddaaten 5 und 2D-Bilddaten 6 erzeugt. In einem zweiten Verfahrensschritt S₂ erfolgt ein Übertragen der 3D-Bilddaten 5 und der 2D-Bilddaten 6 an das Auswertungsmodul 15. In einem dritten Verfahrensschritt S₃ erfolgt ein Ermitteln von zumindest einem Attribut 20 für das erfasste Objekt 50 anhand der 3D-Bilddaten 5 und der 2D-Bilddaten 6 durch ein KI-Modell 16 durch das Auswertungsmodul 15. In einem vierten Verfahrensschritt S₄ erfolgt ein Klassifizieren des zumindest einen Objekts 50, ob es auf dem Gepäcktransportsystem 100 transportierbar ist anhand eines regelbasierten Vergleichs 17 unter Verwendung des ermittelten zumindest einen Attributs 20 und zumindest einer Regelvorgabe 18 durch das Auswertungsmodul 15.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

### Bezugszeichenliste

| | |
|---|---|
| Klassifizierungssystem | 1 |
| Kameramodul | 2 |
| 3D-Bildsensor | 3 |
| 2D-Kamera | 4 |
| 3D-Bilddaten | 5 |
| 2D-Bilddaten | 6 |
| Erstes Objektiv | 7 |
| Zweites Objektiv | 8 |
| Beleuchtungsquelle | 9 |
| Kommunikationseinrichtung | 10 |
| Verbindung | 11 |
| Auswertungsmodul | 15 |
| KI-Modell | 16 |
| Regelbasierter Vergleich | 17 |
| Regelvorgabe | 18 |
| Attribut | 20 |
| Computersystem | 25 |
| Objekt | 50 |
| Fremdereignis | 51 |
| Gepäcktransportsystem | 100 |
| Förderband | 101 |
| Übergeordnete Leiteinrichtung | 102 |
| Verfahrensschritte | S₁, S₂, S₃, S₄ |

## Patentansprüche

1. Klassifizierungssystem (1) für zu transportierende Objekte (50) für ein Gepäcktransportsystem (100), mit
zumindest einem Kameramodul (2), das dazu ausgebildet ist, ein zu transportierendes Objekt (50) zu erfassen, wobei das zumindest eine Kameramodul (2):
a) einen 3D-Bildsensor (3) umfasst, der dazu ausgebildet ist, um 3D-Bilddaten (5) zu erzeugen; und/oder
b) eine 2D-Kamera (4) umfasst, die dazu ausgebildet ist, um 2D-Bilddaten (6) zu erzeugen, und mit
einem Auswertungsmodul (15), wobei das Kameramodul (2) dazu ausgebildet ist, die 3D-Bilddaten (5) und/oder die 2D-Bilddaten (6) an das Auswertungsmodul (15) zu übertragen,
wobei das Auswertungsmodul (15) dazu ausgebildet ist, um ein Kl-Modell (16) zu verwenden, um zumindest ein Attribut (20) des Objekts (50) zu ermitteln,
wobei das Auswertungsmodul (15) weiter dazu ausgebildet ist, um das Objekt (50) mittels eines regelbasierten Vergleichs (17) unter Verwendung des ermittelten zumindest einen Attributs (20) und zumindest einer Regelvorgabe (18) dahingehend zu klassifizieren, ob es auf dem Gepäcktransportsystem (100) transportierbar ist.

2. Klassifizierungssystem (1) nach Anspruch 1,
wobei das zumindest eine Attribut (20) in einer für den Menschen lesbaren Form vorliegt.

3. Klassifizierungssystem (1) nach Anspruch 1 oder 2,
wobei das Auswertungsmodul (15) dazu ausgebildet ist, um das zumindest eine Attribut (20) für einen Benutzer auszugeben.

4. Klassifizierungssystem (1) nach einem der vorstehenden Ansprüche,
wobei das Auswertungsmodul (15) dazu ausgebildet ist, um das zumindest eine Attribut (20) zusammen mit dem Ergebnis der Klassifikation und/oder der zumindest einen Regelvorgabe (18) für einen Benutzer auszugeben.

5. Klassifizierungssystem (1) nach einem der vorstehenden Ansprüche,
wobei eine Eingabeeinheit vorgesehen ist, wobei die Eingabeeinheit dazu ausgebildet ist, um eine Benutzereingabe zu empfangen, wobei das zumindest eine Attribut (20) in Abhängigkeit der empfangenen Benutzereingabe neu festlegbar ist.

6. Klassifizierungssystem (1) nach einem der vorstehenden Ansprüche,
wobei das Auswertungsmodul (15) ein weiteres zusätzliches Attribut (20) für das Objekt (15) ermittelt, wenn das bisher zumindest eine ermittelte Attribut (20) mit einer Wahrscheinlichkeit ermittelt wurde, die unterhalb eines Schwellwerts liegt.

7. Klassifizierungssystem (1) nach einem der vorstehenden Ansprüche,
wobei das zumindest eine Attribut (20) ausgewählt ist aus:
a) Farbe; und/oder
b) Form; und/oder
c) Material; und/oder
d) Abmessungen; und/oder
e) Beschaffenheit; und/oder
f) Art; und/oder
g) außergewöhnliche Eigenschaften; und/oder
h) Gewicht; und/oder
i) Gewichtsverteilung.

8. Klassifizierungssystem (1) nach einem der vorstehenden Ansprüche, wobei es sich bei der Regelvorgabe (18) um eine Vorgabe handelt, die ein Attribut (20) erfüllen muss oder um einen Grenzwert oder einen Wertebereich, den ein Attribut (20) einhalten muss.

9. Klassifizierungssystem (1) nach einem der vorstehenden Ansprüche, wobei der regelbasierte Vergleich (17) mehrere Attribute (20) mit jeweils zumindest einer Regelvorgabe (18) umfasst und eine Hierarchie zwischen den mehreren Attributen (20) bildet, wobei das Objekt (50) auch dann als transportierbar gilt, wenn ein Attribut (20) zusammen mit seiner Regelvorgabe (18) das Objekt (50) als nicht transportierbar klassifiziert, wenn dieses Attribut (20) in der Hierarchie hinter einem anderen Attribut (20) zusammen mit seiner Regelvorgabe (18) steht, welches das Objekt (50) als transportierbar klassifiziert.

10. Klassifizierungssystem (1) nach einem der vorstehenden Ansprüche, wobei das Auswertungsmodul (15) dazu ausgebildet ist, um im regelbasierten Vergleich (17) ein erstes Vergleichsergebnis von einem ersten Attribut (20) mit seiner zumindest einen Regelvorgabe (18) und zumindest einem zweiten Vergleichsergebnis von einem zweiten Attribut (20) mit seiner zumindest einen Regelvorgabe (18) über zumindest eine logische Verknüpfung miteinander zu verrechnen, um aus dem Ergebnis der logischen Verknüpfung das Objekt (50) dahingehend zu klassifizieren, ob es auf dem Gepäcktransportsystem (100) transportierbar ist oder nicht.

11. Klassifizierungssystem (1) nach einem der vorstehenden Ansprüche,
wobei zumindest ein zweites, ein drittes oder zumindest ein viertes Kameramodul (2) mit einem 3D-Bildsensor und/oder einer 2D-Kamera vorgesehen sind, wobei das zumindest eine Attribut (20) mit den:
a) 3D-Bilddaten (5) und den 2D-Bilddaten (6) von lediglich einem oder zumindest zwei oder allen Kameramodulen (2) ermittelt wird; oder
b) 3D-Bilddaten (5) oder den 2D-Bilddaten (6) von lediglich einem oder zumindest zwei oder allen Kameramodulen (2) ermittelt wird.

12. Klassifizierungssystem (1) nach Anspruch 11,
wobei die Kameramodule (2) in unterschiedlicher Ausrichtung und/oder Winkellage um das zu erfassende Objekt (50) herum angeordnet sind, sodass die jeweiligen 3D-Bilddaten (5) und/oder 2D-Bilddaten (6) zumindest teilweise unterschiedliche Bereiche und/oder Seiten des Objekts (50) beinhalten.

13. Klassifizierungssystem (1) nach Anspruch 11,
wobei das Auswertungsmodul (15) dazu ausgebildet ist:
a) die 3D-Bilddaten (5) von mehreren Kameramodulen (2); und/oder
b) die 2D-Bilddaten (6) von mehreren Kameramodulen (2); und/oder
c) die 3D-Bilddaten (5) und die 2D-Bilddaten (6) von einem Kameramodul (2); und/oder
d) die 3D-Bilddaten (5) und die 2D-Bilddaten (6) von mehreren Kameramodulen (2);
miteinander zu fusionieren.

14. Gepäcktransportsystem (100) mit einem Klassifizierungssystem (1) gemäß einem der vorstehenden Ansprüche,
wobei das Gepäcktransportsystem (100) dazu ausgebildet ist, um zu befördernde Objekte (50) auszusondern, wenn diese durch das Klassifizierungssystem (1) dahingehend klassifiziert wurden, dass diese durch das Gepäcktransportsystem (100) nicht transportierbar sind.

15. Klassifizierungsverfahren für zu transportierende Objekte (50) für ein Gepäcktransportsystem (100) mit den folgenden Verfahrensschritten:
- Erfassen (S₁) eines zu transportierenden Objekts (50) mit zumindest einem Kameramodul (2), das einen 3D-Bildsensor (3) und/oder eine 2D-Kamera (4) umfasst und Erzeugen von 3D-Bilddaaten (5) und/oder 2D-Bilddaten (6);
- Übertragen (S₂) der 3D-Bilddaten (5) und/oder der 2D-Bilddaten (6) an das Auswertungsmodul (15);
- Ermitteln (S₃) von zumindest einem Attribut (20) für das erfasste Objekt (50) anhand der 3D-Bilddaten (5) und/oder der 2D-Bilddaten (6) durch ein Kl-Modell (16) durch das Auswertungsmodul (15);
- Klassifizieren (S₄) des zumindest einen Objekts (50), ob es auf dem Gepäcktransportsystem (100) transportierbar ist anhand eines regelbasierten Vergleichs (17) unter Verwendung des ermittelten zumindest einen Attributs (20) und zumindest einer Regelvorgabe (18) durch das Auswertungsmodul (15).
